# EUROPEAN PATENT SPECIFICATION

(11) **EP 3 424 584 B1**
(45) Date of publication and mention of the grant of the patent: **08.07.2020**
(21) Application number: 17197257.3
(22) Date of filing: 19.10.2017
(51) Int. Cl.: B01J 20/04, B01D 53/76, C01B 7/01, C01B 17/56, B01D 53/50, B01D 53/86

(54) **DESULFURIZATION ABSORPTION TOWER, METHOD FOR SETTING UP THE SAME AND METHOD FOR OPERATING THE SAME**
ENTSCHWEFELUNGSABSORPTIONSTURM, VERFAHREN ZUR ERRICHTUNG DAVON UND VERFAHREN ZUM BETRIEB DAVON
TOUR DE DÉSULFURATION PAR ABSORPTION, SON PROCÉDÉ DE MISE EN PLACE ET SON PROCÉDÉ DE FONCTIONNEMENT

(30) Priority: 03.07.2017 CN 201710533738
(43) Date of publication of application: 09.01.2019
(73) Proprietor: Jiangnan Environmental Protection Group Inc., Grand Cayman (KY)
(72) Inventor: LUO, Jing, NANJING, 211100 (CN); ZHANG, Congzhi, NANJING, 211100 (CN); LUO, Yongying, NANJING, 211100 (CN)
(74) Representative: Santarelli

(56) References cited:
- WO-A1-2010/150731
- CN-U- 203 090 733
- CN-Y- 201 208 545
- CN-Y- 201 381 670

## Description

### TECHNICAL FIELD

The present invention relates to an ammonia-process desulfurization absorption tower having an anti-corrosion structure. The present invention further relates to a setup method and an operating method for such a desulfurization absorption tower.

### BACKGROUND ART

A desulfurization absorption tower, for example, an ammonia-process desulfurization absorption tower, is a reaction kettle for an acid-base neutralization reaction. Flue gas containing acid substances such as SO₂ and HCl and alkaline substances such as ammonia water flow along opposite directions in the desulfurization absorption tower, and an acid-base neutralization reaction occurs when the flue gas and the alkaline substances contact each other, and reactants are salts. When the concentration of the salt solution in the tower chamber rises to some extent, crystal particles may be precipitated from the salt solution. The acid substances, the alkaline substances, the salt solution and the crystal particles may corrode and abrade the tower body.

Glass flakes or rubbers are widely used in the desulfurization absorption tower as an anti-corrosion lining of the desulfurization absorption tower. As the environment in the tower chamber is bad during operation of the desulfurization absorption tower, the desulfurization absorption tower lined with glass flakes or rubbers has a short continuous operating cycle and a short service life. According to long-term use experience in domestic and foreign countries, the service life of the tower body ranges from 5 years to 10 years, the anti-corrosion lining needs to be replaced once every 3 to 5 years, and the daily maintenance workload is heavy. In addition, raw materials and adjuvants for such a desulfurization absorption tower are flammable, volatile and toxic. Therefore, the construction environment is bad, and there is a risk of fire during construction.

The utility model CN201288543Y discloses a desulfurization absorption tower with a reinforced concrete structure, of which the tower body compirses an internal anti-corrosion lining and an external reinforced concrete layer connected to the anti-corrosion lining. The anti-corrosion lining is an anti-corrosion plate made of a polymer material, and the anti-corrosion plate is cast together with the reinforced concrete layer and is fixed through anchor paws cast in the reinforced concrete layer. In such a desulfurization absorption tower, the anti-corrosion lining is prone to damage, and it is difficult to timely find the damage to the anti-corrosion lining. As the desulfurization absorption liquid may enter into the reinforced concrete to corrode the reinforced concrete after the anti-corrosion lining is damaged, the tower body is prone to damage. Such a desulfurization absorption tower has a short continuous operating cycle and a short service life, the materials are flammable and toxic, and the repair is difficult when the desulfurization absorption tower is damaged. The utility model CN201208545Y also discloses a similar desulfurization absorption tower, and the technical defects thereof are also similar.

The utility model CN203090733U discloses a desulfurization absorption tower, which comprises a tower body made of glass fiber reinforced plastics. A wear-resisting layer is disposed on an inner surface at the bottom of the tower body, to enhance the wear-resisting property of the inner surface at the bottom. It is difficult to ensure the strength of such a desulfurization absorption tower, and less flue gas is treated under the condition of an equal size. When the amount of flue gas to be treated is over 500000 Nm³/h, the diameter of the desulfurization absorption tower made of glass fiber reinforced plastics is more than 9 m, but a tower of glass fiber reinforced plastics with a large tower diameter has a risk of overall collapse.

The utility model CN201959715U discloses a desulfurization absorption tower made of stainless steel and designed for treating a flue gas from a sintering machine, wherein the whole tower body is made of a stainless steel material. Such a desulfurization absorption tower has defects such as a high investment cost, a great construction difficulty, and difficulty in meeting requirements of different working conditions.

The utility model CN204816188U also discloses a desulfurization absorption tower, of which the tower body is formed by stainless steel plates welded together. Such a desulfurization absorption tower also has defects such as a high investment cost, a great construction difficulty, and difficulty in meeting requirements of different working conditions.

Document WO 2010/150731 A1 discloses an absorption tower, whereby the body is made of a high tensile steel which comprises an internal anti-corrosion layer made of austenitic stainless steel.

### SUMMARY OF THE INVENTION

An objective of the present invention is to provide a desulfurization absorption tower that can operate stably in a long cycle, has a low security risk, and has low investment and operating costs. In addition, another objective of the present invention is to provide a method for setting up such a desulfurization absorption tower and a method for operating such a desulfurization absorption tower.

To this end, the foregoing objective is achieved through an ammonia-process desulfurization absorption tower according to claim 1.

Beneficial effects of the present invention are as follows: the desulfurization absorption tower according to the present invention can operate stably in a long cycle, has a longer service life, and has a relatively low investment cost and a relatively short construction cycle.

According to a further solution of the present invention, the desulfurization absorption tower is an ammonia-process desulfurization absorption tower, wherein the process water is a production make-up water. The ammonia-process desulfurization is efficient, and also has a capability of removing a part of nitrogen oxides in the flue gas. The ammonia water can be supplemented, for example, in a circulation pipeline or an oxidation tank.

According to a further solution of the present invention, the thickness of the stainless steel plate is 2.0 mm, 2.5 mm, 3.0 mm, 3.5 mm, 4.0 mm, 4.5 mm or 5.0 mm.

According to a further solution of the present invention, the anti-corrosion layer comprises multiple stainless steel plates connected together, and preferably welded together.

The anti-corrosion layer comprises a bottom plate, a cylinder and a top plate, the cylinder comprises two or more sections along a height direction, and the stainless steel materials of the sections are selected in dependence on an expected chloride ion concentration of the desulfurization absorption liquid during operation of the desulfurization absorption tower. By selecting an appropriate stainless steel material, the construction cost of the desulfurization absorption tower can be minimized while necessary performance is ensured.

According to a further solution of the present invention, the stainless steel material of the anti-corrosion layer is selected from stainless steel of the following material types: 316L, 2205, 2605N and 2507, and preferably, the stainless steel material is selected in dependence on an expected chloride ion concentration of the desulfurization absorption liquid during operation of the desulfurization absorption tower, wherein 316L is selected when the chloride ion concentration of the desulfurization absorption liquid is less than 10000 mg/L, 2205 or 2605N is selected when the chloride ion concentration of the desulfurization absorption liquid is 10000 to 20000 mg/L, and 2507 is selected when the chloride ion concentration of the desulfurization absorption liquid is more than 20000 mg/L.

According to a further solution of the present invention, the carbon steel is carbon steel whose material type is Q235 or Q345.

According to a further solution of the present invention, the supporting layer is an outer cylinder and/or a supporting frame; preferably, the outer cylinder has the same shape as the anti-corrosion layer, especially has a thickness of 2 to 20 mm, for example, 4 mm, 6 mm, 9 mm, 12 mm or 15 mm; and preferably, the supporting frame comprises multiple supporting columns that are distributed, particularly evenly distributed, in a circumferential direction, especially the supporting columns have an interval of not less than 0.5 m, preferably an interval of 1 to 2 m, and preferably, the supporting column is of H steel. A cheap and firm supporting layer minimizes the thickness of the relatively expensive anti-corrosion layer and thus minimizes the construction cost of the desulfurization absorption tower.

The objective is further achieved through a method for setting up an ammonia-process desulfurization absorption tower according to claim 8.

Through the method according to the present invention, a desulfurization absorption tower that can stably operate in a long cycle and has a low security risk can be set up relatively rapidly with a low cost.

The objective is further achieved through a method for operating an ammonia-process desulfurization absorption tower according to claim 9.

Through the operating method according to the present invention, hazardous substances in the flue gas can be eliminated in an environment-friendly way, which is good for the environment and the public.

Compared with the prior art, in the present invention, by selecting a relatively thin stainless steel plate as the material of the anti-corrosion layer inside the desulfurization absorption tower, the following problems existing in the desulfurization absorption tower using glass flakes or rubbers as a lining are basically avoided: a relatively short continuous operating cycle, a relatively short service life, a fire disaster which occurs easily during construction, a bad construction environment, a situation that construction personnel is prone to poisoning, and the like. At the same time, in the present invention, by setting a supporting layer made of carbon steel to support the anti-corrosion layer, the load is mainly borne by the supporting layer. Therefore, it is reliably ensured that the desulfurization absorption tower can stably operate in a long cycle and has a relatively long service life; moreover, the investment cost is relatively low, the construction cycle is relatively short, less maintenance is required, and the maintenance cost is low.

### BRIEF DESCRIPTION OF THE DRAWINGS

The present invention is explained exemplarily in detail below by means of embodiments and with reference to the accompanying drawings. The embodiments do not limit the present invention, but are used to better understand the present invention. Schematic accompanying drawings are described briefly as follows:
FIG. 1 is a schematic front view of an embodiment of a desulfurization absorption tower according to the present invention;
FIG. 2 is a schematic top view of an embodiment of a desulfurization absorption tower according to the present invention, wherein a supporting layer is constructed as a supporting frame; and
FIG. 3 is a schematic front view of an embodiment of a desulfurization absorption tower according to the present invention, wherein a supporting layer is constructed as an outer cylinder.

### DETAILED DESCRIPTION TO THE EMBODIMENTS

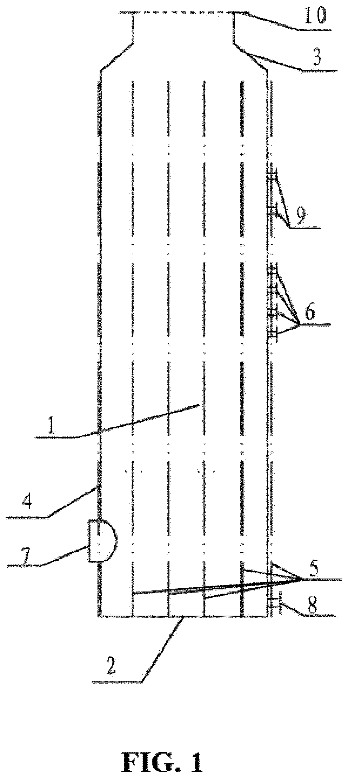

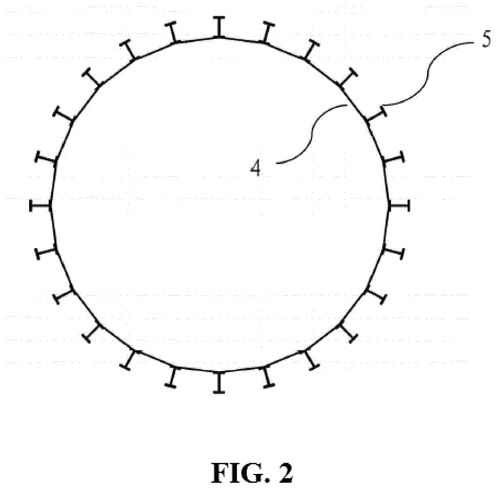

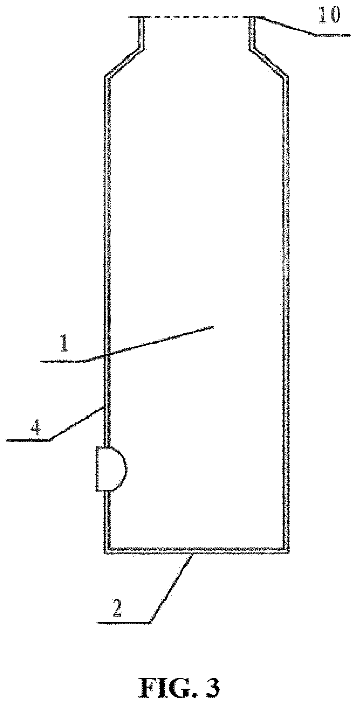

FIG. 1 is a schematic front view of an embodiment of a desulfurization absorption tower according to the present invention. FIG. 2 is a schematic top view of an embodiment of a desulfurization absorption tower according to the present invention, wherein a supporting layer is constructed as a supporting frame. FIG. 3 is a schematic front view of an embodiment of a desulfurization absorption tower according to the present invention, wherein a supporting layer is constructed as an outer cylinder.

As shown in FIG. 1, the desulfurization absorption tower 1 comprises a tower body, and a tower chamber is formed inside the tower body. The tower body is provided with a lower flue gas inlet 7 and an upper flue gas outlet 10 for guiding a flue gas, an upper circulating liquid inlet 6 and a lower circulating liquid outlet 8 for guiding a desulfurization absorption liquid, and a process water inlet 9 for supplementing a process water. The desulfurization absorption tower is constructed as a substantially cylindrical tower, the flue gas outlet 10 is constructed as a slender neck, and only a part of the length of the flue gas outlet 10 is described in FIG. 1.

The tower body comprises an internal anti-corrosion layer that is designed for contacting the flue gas and the desulfurization absorption liquid, defines the tower chamber, and is made of a stainless steel plate whose thickness is 1.0 mm to 6.0 mm, and an external supporting layer that is designed for supporting the anti-corrosion layer and is made of carbon steel. The supporting layer and the anti-corrosion layer are designed to jointly bear a load, wherein the supporting layer is designed to bear a large part of the load, and the anti-corrosion layer is designed to bear a small part of the load.

The desulfurization absorption tower may be a direct exhaust-type desulfurization absorption tower with a chimney, which, for example, has a height of 60 to 120 m, especially 70 to 100 m, for example, a height of 80 m or 90 m; or may be a side exhaust-type desulfurization absorption tower without a chimney, which, for example, has a height of 20 to 80 m, especially 30 to 50 m, for example, a height of 40 m or 60 m. The diameter of the desulfurization absorption tower may be 1 m or several meters, and may be below 30 m, for example, 5 m, 10 m, 15 m, 20 m or 25 m. The diameter and the height of the desulfurization absorption tower may be selected according to parameters of the flue gas to be treated.

As shown in FIG. 1, the anti-corrosion layer includes a bottom plate 2, a cylinder 4 and a top plate 3. The anti-corrosion layer, for example, may be composed of a stainless steel plate whose thickness is 2 mm. The cylinder 4 may comprise multiple stainless steel plates, and the bottom plate 2 and the top plate 3 may also comprise a separate stainless steel plate. The stainless steel plates are connected to each other in a sealing way, and particularly, are welded together. In FIG. 1, the supporting layer is made up of supporting columns 5 that are evenly distributed around the anti-corrosion layer along a circumferential direction. The supporting columns 5 form a supporting frame. The anti-corrosion layer formed by stainless steel plates welded together is held and supported in the supporting frame, and is particularly supported on the supporting columns 5. As shown in FIG. 2, 24 supporting columns 5 are evenly distributed around the anti-corrosion layer along the circumferential direction. In the circumferential direction of the desulfurization absorption tower, the supporting columns 5 are connected to each other, especially welded and/or connected by bolts. In a preferable manner, multiple beams are disposed at different heights between adjacent supporting columns, and the beams connect the adjacent supporting columns to each other. The beams may be horizontally arranged or tilt relative to the supporting columns, for example, form an angle of 15° to 75° with the supporting columns. The beams and the supporting columns may be welded and/or connected by bolts.

The height of the supporting column 5 corresponds substantially to that of the anti-corrosion layer, for example, the height of the supporting columns is ±10 m, preferably ±5 m, especially ±1 m, of the height of the anti-corrosion layer. Favorably, the height of the supporting columns is 95-105% of the height of the anti-corrosion layer.

In the example shown in FIG. 3, the supporting layer is formed by an outer cylinder. The outer cylinder is in a shape the same as that of the anti-corrosion layer, for holding and supporting the anti-corrosion layer. Lots of components of the desulfurization absorption tower 1 are omitted in FIG. 3, for which reference may be made to the embodiment of FIG. 1.

In addition, it is also possible that the supporting layer includes both an outer cylinder and supporting columns; however, different from the embodiment shown in FIG. 1, now the supporting columns support the outer cylinder and thus indirectly support the anti-corrosion layer.

As mentioned above, the anti-corrosion layer is supported by the supporting layer. Additionally, the anti-corrosion layer may also be mechanically connected to the supporting layer, and thus they are fixed together. For example, the anti-corrosion layer may be welded together with the supporting layer.

The cylinder 4 comprises two or more sections along a height direction, and stainless steel materials of the sections are selected in dependence on an expected chloride ion concentration of the desulfurization absorption liquid during operation of the desulfurization absorption tower. The chloride ion concentration may be approximately calculated according to parameters of the flue gas by means of mathematical modeling. In addition, the chloride ion concentration may also be approximately estimated by using data collected during operation of the existing desulfurization absorption towers. For example, existing data of the existing desulfurization absorption towers with a similar size for treating a similar flue gas can be used.

For example, in the case of the following parameters: the amount of raw flue gas is 48000 Nm³/h, the concentration of SO₂ in the raw flue gas is 4200 mg/Nm³, the content of HCl in the raw flue gas is 5.3 mg/Nm³, the total dust concentration in the raw flue gas is 28.4 mg/Nm³, the concentration of SO₂ in purified flue gas is 21.4 mg/Nm³, the total dust concentration (containing aerosol) in the purified flue gas is 2.6 mg/Nm³, the amount of escaping ammonia is 1.3 mg/Nm³, and the recovery rate of ammonia is 99.43%, the chloride ion concentration of the desulfurization absorption liquid is mainly in two ranges: 13000 to 18000 mg/L and 4000 to 8000 mg/L. For example, a section of the cylinder 4 expected to contact the desulfurization liquid whose chloride ion concentration is 13000 to 18000 mg/L may adopt a stainless steel plate with a material type of 2205, and a section of the cylinder 4 expected to contact the desulfurization liquid whose chloride ion concentration is 4000 to 8000 mg/L may adopt a stainless steel plate with a material type of 316L. The supporting columns 5 may adopt H steel, whose width is, for example, 250 mm, and an interval between adjacent supporting columns 5 is, for example, 1.9 m. It is self-evident that profile steel of other cross sections may also be taken into account.

According to a preferable specific implementation solution, the desulfurization absorption tower according to the present invention may be implemented as follows:
- collecting parameters of a flue gas expected to be treated, the parameters comprising: an amount of the flue gas, a pressure of the flue gas, a temperature of the flue gas, a sulfur dioxide concentration of the flue gas, a chloride ion concentration of the flue gas, and so on; and then according to these parameters of the flue gas:
- designing a size, for example, a diameter and a height, of the desulfurization absorption tower according to the parameters of the flue gas, and determining sizes and positions of a flue gas inlet, a flue gas outlet, a circulating liquid inlet, a circulating liquid outlet, and a process water inlet;
- determining an expected chloride ion concentration of the desulfurization absorption liquid along a height direction, wherein the desulfurization absorption liquid is ammonia water, and determining, according to the determined chloride ion concentration, sections of the anti-corrosion layer in the height direction and stainless steel materials of the sections;
- designing internal components and pipe orifices of the desulfurization absorption tower;
- determining a load of the desulfurization absorption tower, and then determining a load distribution proportion between the anti-corrosion layer and the supporting layer, selecting a variant (an outer cylinder or a supporting frame) of the supporting layer, calculating a thickness of the anti-corrosion layer and determining a size of the supporting layer; and
- constructing a base of the desulfurization absorption tower according to the total weight of the desulfurization absorption tower and, constructing the anti-corrosion layer on the base of the desulfurization absorption tower, and constructing the supporting layer on the base of the desulfurization absorption tower, wherein the construction of the anti-corrosion layer and the construction of the supporting layer are carried out alternately.

According to a preferable implementation solution, the desulfurization absorption tower according to the present invention may be operated in the following manner:
A raw flue gas enters into a tower chamber from a lower flue gas inlet 7 of the desulfurization absorption tower, the flue gas flows from bottom to top, is cooled, washed and desulfurized by ammonia water as a desulfurization absorption liquid sprayed via a circulating liquid inlet 6, and fine particles are removed from the flue gas; the flue gas is demisted before arriving at a flue gas outlet 10, then a purified flue gas that is desulfurized substantially is discharged from a flue gas outlet 10 at the top of the tower, and the flue gas outlet 10 may be constructed as a direct exhaust chimney. The desulfurization absorption liquid flows back, via a circulating liquid outlet 8, to a corresponding circulation tank and a corresponding oxidation tank. A process water is continuously supplemented from a process water inlet 9, An ammonia water is supplemented to a circulation pipeline and an oxidation tank, the desulfurization absorption liquid whose ammonium sulfate concentration reaches a predetermined degree is finally conveyed to an ammonium sulfate post-treatment system via the circulating liquid outlet 8, and after densification, centrifugal separation, drying and package, a product ammonium sulfate is obtained. Under some circumstances, evaporative crystallization may be set before the densification procedure.

For example, in the case of the following parameters: the amount of the raw flue gas is 510000 Nm³/h, the concentration of SO₂ in the raw flue gas is 2200 mg/Nm³, the content of HCl in the raw flue gas is 7.6 mg/Nm³, the total dust concentration in the raw flue gas is 15.3 mg/Nm³, the concentration of SO₂ in purified flue gas is 20.1 mg/Nm³, the total dust concentration (containing aerosol) in the purified flue gas is 1.7 mg/Nm³, the amount of escaping ammonia is 0.8 mg/Nm³, and the recovery rate of ammonia is 99.6%, an appropriate desulfurization absorption tower has the following structure: the desulfurization absorption tower comprises an internal anti-corrosion layer and an external supporting layer, and the supporting layer comprises 24 supporting columns 5 that form a steel supporting frame. The anti-corrosion layer is formed by a stainless steel plate whose thickness is 4 mm, and comprises a bottom plate 2, a top plate 3 and a cylinder 4. The anti-corrosion layer is held and supported on the external supporting layer. The load is mainly borne by the supporting layer. The cylinder 4 comprises multiple stainless steel plates, which have a thickness of 4 mm and a height of 2/3 m respectively, and which are welded to each other. The supporting columns adopt H steel, and the width of the H steel is 350 mm. An interval between adjacent supporting columns is 2.5 m.

As the stainless steel plates in the desulfurization absorption tower have a small thickness, compared with the conventional carbon steel tower having a glass flake lining, the total construction cost of the desulfurization absorption tower is reduced by more than 10%, and the construction cycle may be shortened by about 1/3.

In such a desulfurization absorption tower, the chloride ion concentration in the desulfurization absorption liquid is approximately determined according to the parameters of the flue gas, and the material of the anti-corrosion layer is selected according to an expected chloride ion concentration of the desulfurization absorption liquid. Herein, it is determined that the chloride ion concentration is mainly in two ranges: 23000 to 31000 mg/L and 14000 to 17000 mg/L. A section of the cylinder 4 expected to contact the desulfurization absorption liquid whose chloride ion concentration is 23000 to 31000 mg/L may adopt a stainless steel plate with a material type of 2507, and a section of the cylinder 4 expected to contact the desulfurization absorption liquid whose chloride ion concentration is 14000 to 17000 mg/L may adopt a stainless steel plate with a material type of 2205. For such a desulfurization absorption tower, no overhaul is needed in three years.

For example, under the condition of the parameters mentioned in the above example, an appropriate desulfurization absorption tower has the following structure: the desulfurization absorption tower is basically the same as the desulfurization absorption tower mentioned previously, and the main difference lies in that the thickness of the steel plate of the anti-corrosion layer is 3.5 mm, the supporting layer is constructed as an outer cylinder, and the outer cylinder is made of carbon steel whose material type is Q235 and has a thickness of 9 mm. Compared with the conventional carbon steel tower having a glass flake lining, the total construction cost and the construction cycle of the desulfurization absorption tower are both reduced.

## Claims

1. An ammonia-process desulfurization absorption tower, comprising a tower body, a tower chamber being formed inside the tower body, and the tower body being provided with a lower flue gas inlet (7) and an upper flue gas outlet (10) for guiding a flue gas, an upper circulating liquid inlet (6) and a lower circulating liquid outlet (8) for guiding a desulfurization absorption liquid, and a process water inlet (9) for supplementing a process water, **characterized in that**, the tower body comprises an internal anti-corrosion layer that is designed for contacting the flue gas and the desulfurization absorption liquid, defines the tower chamber, and is made of a stainless steel plate whose thickness is 1.0 mm to 6.0 mm, and an external supporting layer that is designed for supporting the anti-corrosion layer and is made of carbon steel, especially carbon steel whose material type is Q235 or Q345, wherein the supporting layer and the anti-corrosion layer are designed to jointly bear a load, wherein the supporting layer is designed to bear a large part of the load, and the anti-corrosion layer is designed to bear a small part of the load, wherein the anti-corrosion layer comprises a bottom plate (2), a cylinder (4), and a top plate (3), wherein the cylinder comprises two or more sections along a height direction and stainless steel materials of the sections are selected in dependence on an expected chloride ion concentration of the desulfurization absorption liquid during operation of the desulfurization absorption tower.

2. The desulfurization absorption tower according to claim 1, **characterized in that** the thickness of the stainless steel plate is 2.0 mm, 2.5 mm, 3.0 mm, 3.5 mm, 4.0 mm, 4.5 mm or 5.0 mm.

3. The desulfurization absorption tower according to claim 1 or 2, **characterized in that** the anti-corrosion layer comprises multiple stainless steel plates connected together.

4. The desulfurization absorption tower according to any of claims 1 to 3, **characterized in that** the stainless steel material of the anti-corrosion layer is selected from stainless steel of the following material types: 316L, 2205, 2605N and 2507.

5. The desulfurization absorption tower according to claim 4, wherein 316L is selected when the chloride ion concentration of the desulfurization absorption liquid is less than 10000 mg/L, 2205 or 2605N is selected when the chloride ion concentration of the desulfurization absorption liquid is 10000 to 20000 mg/L, and 2507 is selected when the chloride ion concentration of the desulfurization absorption liquid is more than 20000 mg/L.

6. The desulfurization absorption tower according to any of claims 1 to 5, **characterized in that** the supporting layer comprises an outer cylinder and/or a supporting frame;
wherein preferably the outer cylinder has the same shape as the anti-corrosion layer, especially has a thickness of 2 to 20 mm, for example 4 mm, 6 mm, 9 mm, 12 mm or 15 mm; and
wherein preferably the supporting frame comprises multiple supporting columns (5) that are distributed, particularly evenly distributed, in a circumferential direction, especially the supporting columns have an interval of not less than 0.5 m, preferably an interval of 1 to 2 m, and preferably, the supporting columns are of H steel.

7. The desulfurization absorption tower according to claim 6, **characterized in that** in the circumferential direction of the desulfurization absorption tower, the supporting columns (5) are connected to each other, especially welded and/or connected by bolts; preferably, multiple beams are disposed at different heights between adjacent supporting columns (5), and the beams connect the adjacent supporting columns to each other; and preferably, the height of the supporting column (5) is 95-105% of the height of the anti-corrosion layer.

8. A method for setting up the ammonia-process desulfurization absorption tower according to any of claims 1 to 7, comprising the following steps:
- predetermining parameters of a flue gas to be treated during operation of the desulfurization absorption tower, the parameters comprising: an amount of the flue gas, a pressure of the flue gas, a sulfur dioxide concentration of the flue gas, and a chloride ion concentration of the flue gas;
- determining, according to the parameters of the flue gas, an expected chloride ion concentration of a desulfurization absorption liquid along a height direction during operation of the desulfurization absorption tower, wherein the desulfurization absorption liquid is ammonia water;
- determining, according to the parameters of the flue gas, a size of a tower chamber of the desulfurization absorption tower, and determining sizes and positions of a flue gas inlet, a flue gas outlet, a circulating liquid inlet, a circulating liquid outlet, and a process water inlet;
- determining, according to the expected chloride ion concentration of the desulfurization absorption liquid, sections of the anti-corrosion layer in the height direction of the desulfurization absorption tower and stainless steel materials of the sections;
- determining, according to the parameters of the flue gas, a load of the desulfurization absorption tower, then determining a load distribution between the anti-corrosion layer and the supporting layer, and then determining a thickness of the anti-corrosion layer and a size of the supporting layer;
- setting up a base of the desulfurization absorption tower according to the total weight of the desulfurization absorption tower; and
- setting up the anti-corrosion layer and the supporting layer on the base of the desulfurization absorption tower according to the determined sizes and materials of the anti-corrosion layer and the supporting layer, wherein, preferably, the process of setting up the anti-corrosion layer and the process of setting up the supporting layer are carried out alternately.

9. A method for operating the ammonia-process desulfurization absorption tower according to any of claims 1 to 7, comprising the following steps:
- introducing a raw flue gas into a tower chamber of the desulfurization absorption tower via a flue gas inlet, wherein the flue gas flows from bottom to top in the tower chamber, and introducing a purified flue gas out of the desulfurization absorption tower via a flue gas outlet;
- spraying ammonia water as a desulfurization absorption liquid from top to bottom in the tower chamber via a circulating liquid inlet, wherein the flue gas is cooled, washed and desulfurized, and fine particles are removed from the flue gas, and preferably, before the flue gas leaves the tower chamber via a flue gas outlet, the flue gas is demisted;
- supplementing a process water via a process water inlet; and
- guiding a desulfurization absorption liquid with a predetermined content of ammonium sulfate to an ammonium sulfate post-treatment system via the circulating liquid outlet.

## Patentansprüche

1. Entschwefelungsabsorptionsturm für einen Ammoniakprozess, mit einem Turmkörper, einer Turmkammer, die innerhalb des Turmkörpers geformt ist, und wobei der Turmkörper mit einem unteren Abgaseinlass (7) und einem oberen Abgasauslass (10) zum Führen eines Abgases, einem oberen Zirkulationsflüssigkeitseinlass (6) und einem unteren Zirkulationsflüssigkeitsauslass (8) zum Führen einer Entschwefelungsabsorptionsflüssigkeit sowie einem Prozesswassereinlass (9) zum Ergänzen eines Prozesswassers aufweist, **dadurch gekennzeichnet, dass** der Turmkörper eine innere Antikorrosionsschicht, die zum Kontakt mit dem Abgas und der Entschwefelungsabsorptionsflüssigkeit ausgelegt ist, die Turmkammer definiert und aus einer Platte aus rostfreiem Stahl besteht, deren Dicke zwischen 1,0 mm bis 6,0 mm liegt, und eine externe Trägerschicht umfasst, die derart ausgelegt ist, die Antikorrosionsschicht zu tragen, und aus Kohlenstoffstahl besteht, insbesondere Kohlenstoffstahl, dessen Materialtyp Q235 oder Q345 ist, wobei die Trägerschicht und die Antikorrosionsschicht so ausgelegt sind, gemeinsam eine Beladung zu tragen, wobei die Trägerschicht so ausgelegt ist, einen großen Teil der Beladung zu tragen, und die Antikorrosionsschicht so ausgelegt ist, einen kleinen Teil der Beladung zu tragen, wobei die Antikorrosionsschicht eine Bodenplatte (2), einen Zylinder (4) und eine obere Platte (3) umfasst, wobei der Zylinder zwei oder mehr Abschnitte entlang einer Höhenrichtung umfasst und Materialien aus rostfreiem Stahl der Abschnitte in Abhängigkeit einer erwarteten Chloridionenkonzentration der Entschwefelungsabsorptionsflüssigkeit während des Betriebs des Entschwefelungsabsorptionsturmes gewählt sind.

2. Entschwefelungsabsorptionsturm nach Anspruch 1, **dadurch gekennzeichnet, dass** die Dicke der Platte aus rostfreiem Stahl 2,0 mm, 2,5 mm, 3,0 mm, 3,5 mm, 4,0 mm, 4,5 mm oder 5,0 mm beträgt.

3. Entschwefelungsabsorptionsturm nach einem der Ansprüche 1 oder 2, **dadurch gekennzeichnet, dass** die Antikorrosionsschicht mehrere miteinander verbundene Platten aus rostfreiem Stahl umfasst.

4. Entschwefelungsabsorptionsturm nach einem der Ansprüche 1 bis 3,
**dadurch gekennzeichnet, dass** das Material aus rostfreiem Stahl der Antikorrosionsschicht aus rostfreiem Stahl der folgenden Materialtypen gewählt ist: 316L, 2205, 2605N und 2507.

5. Entschwefelungsabsorptionsturm nach Anspruch 4, wobei 316L ausgewählt ist, wenn die Chloridionenkonzentration der Entschwefelungsabsorptionsflüssigkeit kleiner als 10000 mg/l ist, 2205 oder 2605N ausgewählt ist, wenn die Chloridionenkonzentration der Entschwefelungsabsorptionsflüssigkeit 10000 bis 20000 mg/l ist und 2507 ausgewählt ist, wenn die Chloridionenkonzentration der Entschwefelungsabsorptionsflüssigkeit mehr als 20000 mg/l ist.

6. Entschwefelungsabsorptionsturm nach einem der Ansprüche 1 bis 5, **dadurch gekennzeichnet, dass** die Trägerschicht einen Außenzylinder und/oder einen Trägerrahmen umfasst;
wobei bevorzugt der Außenzylinder dieselbe Form wie die Antikorrosionsschicht, insbesondere eine Dicke von 2 bis 20 mm, beispielsweise 4 mm, 6 mm, 9 mm, 12 mm oder 15 mm aufweist; und
wobei bevorzugt der Trägerrahmen mehrere Trägersäulen (5) umfasst, die insbesondere gleichmäßig verteilt in einer Umfangsrichtung verteilt sind, wobei insbesondere die Trägersäulen ein Intervall von nicht weniger als 0,5 m, bevorzugt ein Intervall von 1 bis 2 m aufweisen und bevorzugt die Trägersäulen aus H-Stahl bestehen.

7. Entschwefelungsabsorptionsturm nach Anspruch 6, **dadurch gekennzeichnet, dass** in der Umfangsrichtung des Entschwefelungsabsorptionsturmes die Trägersäulen (5) miteinander verbunden sind, insbesondere verschweißt und/oder durch Schrauben verbunden sind; wobei bevorzugt mehrere Träger auf verschiedenen Höhen zwischen benachbarten Trägersäulen (5) angeordnet sind und die Träger die benachbarten Trägersäulen miteinander verbinden; und bevorzugt die Höhe der Trägersäule (5) 95 - 105% der Höhe der Antikorrosionsschicht beträgt.

8. Verfahren zum Einrichten des Entschwefelungsabsorptionsturmes für Ammoniakprozess nach einem der Ansprüche 1 bis 7, mit den folgenden Schritten:
- Vorbestimmen von Parametern des zu behandelnden Abgases während des Betriebs des Entschwefelungsabsorptionsturmes, wobei die Parameter umfassen: eine Menge des Abgases, einen Druck des Abgases, eine Schwefeldioxidkonzentration des Abgases und eine Chloridionenkonzentration des Abgases;
- gemäß der Parameter des Abgases Bestimmen einer erwarteten Chloridionenkonzentration einer Entschwefelungsabsorptionsflüssigkeit entlang einer Höhenrichtung während des Betriebs des Entschwefelungsabsorptionsturmes, wobei die Entschwefelungsabsorptionsflüssigkeit Ammoniakwasser ist;
- gemäß den Parametern des Abgases Bestimmen einer Größe einer Turmkammer des Entschwefelungsabsorptionsturmes und Bestimmen von Größen und Positionen eines Abgaseinlasses, eines Abgasauslasses, eines Zirkulationsflüssigkeitseinlasses, eines Zirkulationsflüssigkeitsauslasses und eines Prozesswassereinlasses;
- gemäß der erwarteten Chloridionenkonzentration der Entschwefelungsabsorptionsflüssigkeit Bestimmen von Abschnitten der Antikorrosionsschicht in der Höhenrichtung des Entschwefelungsabsorptionsturmes und von Materialien aus rostfreiem Stahl der Abschnitte;
- gemäß den Parametern des Abgases Bestimmen einer Beladung des Entschwefelungsabsorptionsturmes, anschließend Bestimmen einer Beladungsverteilung zwischen der Antikorrosionsschicht und der Trägerschicht und anschließend Bestimmen einer Dicke der Antikorrosionsschicht und einer Größe der Trägerschicht;
- Einrichten einer Basis des Entschwefelungsabsorptionsturmes gemäß dem Gesamtgewicht des Entschwefelungsabsorptionsturmes; und
- Einrichten der Antikorrosionsschicht und der Trägerschicht auf der Basis des Entschwefelungsabsorptionsturmes gemäß den vorbestimmten Größen und Materialien der Antikorrosionsschicht und der Trägerschicht, wobei bevorzugt der Prozess zum Einrichten der Antikorrosionsschicht und der Prozess zum Einrichten der Trägerschicht abwechselnd ausgeführt werden.

9. Verfahren zum Betrieb des Entschwefelungsabsorptionsturmes für Ammoniakprozess nach einem der Ansprüche 1 bis 7, mit den folgenden Schritten:
- Einführen eines Rohabgases in eine Turmkammer des Entschwefelungsabsorptionsturmes über einen Abgaseinlass, wobei das Abgas von unten nach oben in der Turmkammer strömt, und Einführen eines gereinigten Abgases aus dem Entschwefelungsabsorptionsturm über einen Abgasauslass;
- Sprühen von Ammoniakwasser als eine Entschwefelungsabsorptionsflüssigkeit von oben nach unten in der Turmkammer über einen Zirkulationsflüssigkeitseinlass, wobei das Abgas gekühlt, gewaschen und entschwefelt wird, und feine Partikel von dem Abgas entfernt werden, und bevorzugt bevor das Abgas die Turmkammer über einen Abgasauslass verlässt, das Abgas entnebelt wird; und
- Ergänzen eines Prozesswassers über einen Prozesswassereinlass; und
- Führen einer Entschwefelungsabsorptionsflüssigkeit mit einem vorbestimmten Gehalt an Ammoniaksulfat an ein Ammoniaksulfat-Nachbehandlungssystem über den Zirkulationsflüssigkeitsauslass.

## Revendications

1. Tour d'absorption avec désulfuration par traitement ammoniacal, comprenant un corps de tour, une chambre de tour formée à l'intérieur du corps de tour, le corps de tour étant doté d'une entrée de gaz de carneau inférieure (7) et d'une sortie de gaz de carneau supérieure (10) pour guider un gaz de carneau, une entrée de liquide en circulation supérieure (6) et une sortie de liquide en circulation inférieure (8) pour guider un liquide d'absorption par désulfuration, et une entrée d'eau de traitement (9) pour supplémenter une eau de traitement, **caractérisée en ce que** le corps de tour comprend une couche anticorrosion interne qui est conçue pour mettre en contact le gaz de carneau et le liquide d'absorption par désulfuration, définit la chambre de tour, et est faite d'une plaque en acier inoxydable dont l'épaisseur est de 1,0 mm à 6,0 mm, et une couche de support externe qui est conçue pour supporter la couche anticorrosion et est faite d'acier au carbone, en particulier d'un acier au carbone dont le type de matériau est Q235 ou Q345, dans laquelle la couche de support et la couche anticorrosion sont conçues pour porter conjointement une charge, dans laquelle la couche de support est conçue pour porter une grande partie de la charge, et la couche anticorrosion est conçue pour porter une petite partie de la charge, dans laquelle la couche anticorrosion comprend une plaque inférieure (2), un cylindre (4), et une plaque supérieure (3), dans laquelle le cylindre comprend deux ou plus de deux sections le long de la direction de la hauteur et des matériaux en acier inoxydable des sections sont choisis en fonction de la concentration d'ions chlorure prévue du liquide d'absorption par désulfuration durant le fonctionnement de la tour d'absorption par désulfuration.

2. Tour d'absorption avec désulfuration selon la revendication 1, **caractérisée en ce que** l'épaisseur de la plaque en acier inoxydable est de 2,0 mm, 2,5 mm, 3,0 mm, 3,5 mm, 4,0 mm, 4,5 mm ou 5,0 mm.

3. Tour d'absorption avec désulfuration selon la revendication 1 ou 2, **caractérisée en ce que** la couche anticorrosion comprend de multiples plaques en acier inoxydable connectées ensemble.

4. Tour d'absorption avec désulfuration selon l'une quelconque des revendications 1 à 3, **caractérisée en ce que** le matériau en acier inoxydable de la couche anticorrosion est choisi parmi les aciers inoxydables des types de matériau suivants : 316L, 2205, 2605N et 2507.

5. Tour d'absorption avec désulfuration selon la revendication 4, dans laquelle 316L est choisi quand la concentration d'ions chlorure du liquide d'absorption avec désulfuration est inférieure à 10 000 mg/l, 2205 ou 2605N est choisi quand la concentration d'ions chlorure du liquide d'absorption avec désulfuration est de 10 000 à 20 000 mg/l, et 2507 est choisi quand la concentration d'ions chlorure du liquide d'absorption avec désulfuration est supérieure à 20 000 mg/l.

6. Tour d'absorption avec désulfuration selon l'une quelconque des revendications 1 à 5, **caractérisée en ce que** la couche de support comprend un cylindre extérieur et/ou un bâti de support ;
dans laquelle de préférence le cylindre extérieur a la même forme que la couche anticorrosion, en particulier a une épaisseur de 2 à 20 mm, par exemple de 4 mm, 6 mm, 9 mm, 12 mm ou 15 mm ; et
dans laquelle de préférence le bâti de support comprend de multiples colonnes de support (5) qui sont distribuées, en particulier distribuées uniformément, dans une direction circonférentielle, en particulier les colonnes de support ont un intervalle non inférieur à 0,5 m, de préférence un intervalle de 1 à 2 m, et de préférence les colonnes de support sont en acier H.

7. Tour d'absorption avec désulfuration selon la revendication 6, **caractérisée en ce que**, dans la direction circonférentielle de la tour d'absorption avec désulfuration, les colonnes de support (5) sont connectées les unes aux autres, en particulier soudées et/ou connectées par des boulons ; de préférence de multiples poutres sont disposées à des hauteurs différentes entre des colonnes de support adjacentes (5), et les poutres connectent les colonnes de support adjacentes les unes aux autres ; et de préférence la hauteur de la colonne de support (5) est de 95 à 105 % de la hauteur de la couche anticorrosion.

8. Procédé pour configurer la tour d'absorption avec désulfuration par traitement ammoniacal de l'une quelconque des revendications 1 à 7, comprenant les étapes suivantes consistant à :
- prédéterminer des paramètres du gaz de carneau devant être traité durant le fonctionnement de la tour d'absorption avec désulfuration, les paramètres comprenant : la quantité du gaz de carneau, la pression du gaz de carneau, la concentration de dioxyde de soufre du gaz de carneau, et la concentration d'ions chlorure du gaz de carneau ;
- déterminer, en fonction des paramètres du gaz de carneau, la concentration prévue d'ions chlorure d'un liquide d'absorption avec désulfuration le long de la direction de la hauteur durant le fonctionnement de la tour d'absorption avec désulfuration, le liquide d'absorption avec désulfuration étant de l'ammoniaque ;
- déterminer, en fonction des paramètres du gaz de carneau, la taille de la chambre de tour de la tour d'absorption avec désulfuration, et déterminer les tailles et positions de l'entrée de gaz de carneau, de la sortie de gaz de carneau, de l'entrée de liquide en circulation, de la sortie de liquide en circulation, et de l'entrée d'eau de traitement ;
- déterminer, en fonction de la concentration prévue d'ions chlorure du liquide d'absorption avec désulfuration, les sections de la couche anticorrosion dans la direction de la hauteur de la tour d'absorption avec désulfuration, et les matériaux en acier inoxydable des sections ;
- déterminer, en fonction des paramètres du gaz de carneau, la charge de la tour d'absorption avec désulfuration, puis déterminer la distribution de charge entre la couche anticorrosion et la couche de support, puis déterminer l'épaisseur de la couche anticorrosion et la taille de la couche de support ;
- configurer une base de la tour d'absorption avec désulfuration en fonction du poids total de la tour d'absorption avec désulfuration ; et
- configurer la couche anticorrosion et la couche de support sur la base de la tour d'absorption avec désulfuration en fonction des tailles et matériaux déterminés de la couche anticorrosion et de la couche de support,
dans lequel de préférence le procédé de configuration de la couche anticorrosion et le procédé de configuration de la couche de support sont effectués en alternance.

9. Procédé pour faire fonctionner la tour d'absorption avec désulfuration par traitement ammoniacal selon l'une quelconque des revendications 1 à 7, comprenant les étapes suivantes consistant à :
- introduire un gaz de carneau brut dans une chambre de tour de la tour d'absorption avec désulfuration via une entrée de gaz de carneau, lequel gaz de carneau circule de bas en haut dans la chambre de tour, et introduire un gaz de carneau purifié hors de la tour d'absorption avec désulfuration via une sortie de gaz de carneau ;
- pulvériser de l'ammoniaque en tant que liquide d'absorption avec désulfuration de haut en bas dans la chambre de tour via une entrée de liquide en circulation, dans laquelle le gaz de carneau est refroidi, lavé et désulfuré, et les fines particules sont éliminées du gaz de carneau, et de préférence, avant que le gaz de carneau quitte la chambre de tour via une sortie de gaz de carneau, le gaz de carneau est déshumidifié ;
- supplémenter une eau de traitement via une entrée d'eau de traitement ; et
- guider un liquide d'absorption avec désulfuration ayant une quantité prédéterminée de sulfate d'ammonium vers un système de post-traitement au sulfate d'ammonium via la sortie de liquide en circulation.
